Europäisches Patentamt

European Patent Office

Office européen des brevets

(11) Numéro de publication : **0 327 422 B1**

# FASCICULE DE BREVET EUROPEEN

(12)

(45) Date de publication du fascicule du brevet :
**19.08.92 Bulletin 92/34**

(21) Numéro de dépôt : **89400180.9**

(22) Date de dépôt : **23.01.89**

(51) Int. Cl.⁵ : **G01V 3/20**

(54) **Interprétation de diagraphies électriques.**

(30) Priorité : **22.01.88 FR 8800829**

(43) Date de publication de la demande :
**09.08.89 Bulletin 89/32**

(45) Mention de la délivrance du brevet :
**19.08.92 Bulletin 92/34**

(84) Etats contractants désignés :
**DE FR GB IT NL**

(56) Documents cités :
**GB-A- 2 146 127**
**US-A- 3 838 335**

(56) Documents cités :
**US-A- 4 601 353**
**WORLD OIL, vol. 201, no. 2, août 1985, pages 46-52, Houston, Texas, US; D.F. COOPE et al.: "MWD logs provide fast, accurateformation data"**

(73) Titulaire : **INSTITUT FRANCAIS DU PETROLE**
**4, Avenue de Bois Préau**
**F-92502 Rueil-Malmaison (FR)**

(72) Inventeur : **Lessi, Jacques**
**13 bis, rue du Puits**
**F-78580 Maule (FR)**
Inventeur : **Wittrisch, Christian**
**24, rue George Sand**
**F-92500 Rueil-Malmaison (FR)**

Jouve, 18, rue Saint-Denis, 75001 PARIS

**Description**

La présente invention propose une méthode pour déterminer à partir d'un sondage dans un milieu géologique comportant au moins une hétérogénéité, un ou plusieurs paramètres liés à une ou plusieurs caractéristiques du milieu ou de l'hétérogénéité, telle une résistivité, et au moins un paramètre dimensionnel, tel la distance entre le sondage et l'interface du milieu avec l'hétérogénéité.

L'invention s'applique notamment lorsqu'il s'agit de reconnaître des niveaux stratigraphiques d'un réservoir pétrolier à partir d'un forage. Les niveaux stratigraphiques pouvant être un toit, ou une intercalation, ou des interfaces entre fluide, tel l'interface eau-huile située au-dessus ou en-dessous du sondage.

L'évolution de ces paramètres caractéristiques et dimensionnels, qui ont une grande importance pour la production d'hydrocarbures, permet par exemple : par le suivi du toit et du mur, la détermination de l'épaisseur du réservoir et l'estimation des réserves ; par le suivi d'une intercalation, l'estimation de la communication hydraulique entre deux parties ou réservoir ; par le repérage de lentille argileuse, la protection contre l'effet de cône (généralement dénommé "coning") d'eau ou de gaz, en perforant les tubages et en produisant les hydrocarbures au-dessus ou au-dessous d'une lentille argileuse ; par le suivi des interfaces en cours de production, l'optimisation de la production par une complétion sélective évolutive ; par le suivi des différents niveaux géologiques, des mesures au cours du forage, telles qu'on les effectue avec les techniques dites "MWD" (de l'anglosaxon Measurement While Drilling), le pilotage d'un forage pour son implantation optimale.

On connait par le brevet US 3 838 335 une méthode et un dispositif pour déterminer la présence et la distance d'un contraste de résistivité électrique horizontale par rapport à la surface de la terre. Cette méthode s'applique dans le cadre des puits verticaux et pour laquelle l'hétérogénéité recherchée est une interface perpendiculaire à l'axe du puits. La méthode consiste à traiter la différence de potentiel existant entre deux électrodes de mesure situées de part et d'autre et à égale distance d'une électrode d'injection. L'évolution de cette différence de potentiel en fonction de la descente dans le puits, permet par calage sur un réseau d'abaques, la détermination de la distance séparant le fond du puits de l'hétérogénéité recherchée.

Durant la dernière décennie les techniques liées au forage se sont considérablement développés et tout particulièrement les techniques liés aux forages horizontaux qui permettent de traverser les réservoirs sur des plus grandes longueurs et ainsi obtenir une meilleure caractérisation du réservoir à partir des mesures et des échantillons recueillis dans les puits.

On développe actuellement de nombreuses études pour examiner les conditions particulières des applications dans les puits horizontaux et de tels problèmes présentent souvent des difficultés de par la structure et la géométrie de tels puits.

Ainsi dans le cas présent où l'on désire obtenir une méthode de détermination d'un paramètre liés à une ou plusieurs caractéristiques du milieu ou de l'hétérogénéité telle une résistivité et une distance telle que celle entre le sondage et l'interface du milieu avec l'hétérogénéité, la connaissance du document précisé ne permet pas d'obtenir une méthode efficace de détermination. En effet utilisée dans un puits horizontal cette méthode est inopérante.

Lorsque l'hétérogénéité recherchée est plus ou moins parallèle à l'axe du puits, la localisation de l'émetteur à égale distance entre les deux récepteurs implique qu'il n'existe plus de différence de potentiel entre les deux électrodes de mesures puisqu'elles sont à la même distance de l'hétérogénéité.

De plus la différence de potentiel sera nulle quel que soit la position de l'outil dans le puits.

De plus l'appareillage proposé par le brevet MILLER repose de manière évidente sur une mise en oeuvre au câble qui ne peut être utilisé en puits horizontaux.

L'idée mère de la présente invention est de réaliser un dispositif multi-spacing entre l'émetteur et le récepteur, la détermination des paramètres résistivité et distance de l'interface étant obtenue par calage sur un réseau d'abaques calculé en faisant varier la distance électrode d'injection-électrode de mesure.

L'invention fournit une méthode de détermination, dans un milieu géologique comportant au moins une hétérogénéité, d'au moins un paramètre caractéristique du milieu ou de l'hétérogénéité et au moins un paramètre dimensionnel p du milieu ou de l'hétérogénéité, caractérisée en ce qu'un ensemble de mesure étant descendu au fond d'un puits et comportant au moins un émetteur coopérant avec au moins deux détecteurs disposés sensiblement le long d'une droite, chaque détecteur présentant sur ladite droite une distance croissante par rapport audit émetteur, de manière à ce que pour effectuer une mesure, on associe l'émetteur à un détecteur, séparés par une distance d donnée, l'ensemble de mesure fournissant alors au moins une valeur d'un paramètre caractéristique pour ladite distance d, méthode par laquelle on effectue les étapes suivantes :

   – on définit une application caractéristique du phénomène physique associé aux paramètres caractéristiques utilisés, cette application définissant une relation entre ladite distance d émetteur-récepteur, ladite valeur du paramètre caractéristique mesuré, ledit paramètre dimensionnel p du milieu ou de l'hétérogénéité, et ledit paramètre caractéristique du milieu, ou de l'hétérogénéité, et un ou plusieurs paramètres combinés desdits paramètres dimensionnels, paramètres caractéristiques du milieu de l'hétérogénéité, et de ladite distance d ou de ladite valeur mesurée,

– on représente par simulation théorique préalable à la mesure, l'évolution des différents paramètres, valeurs et distance liés par ladite application,

– on mesure initialement un desdits paramètres dimensionnels, ou caractéristique du milieu ou caractéristique de l'hétérogénéité, ou un paramètre combiné de ces paramètres dimensionnels et caractéristiques,

– on mesure successivement avec ledit ensemble de mesure, indépendamment de sa position dans le puits pour une distance d émetteur-récepteur donnée, une valeur caractéristique, et

– au moyen dudit paramètre caractéristique ou dimensionnel initialement mesuré, de ladite valeur caractéristique mesurée et de ladite distance d émetteur-récepteur associée à ladite valeur caractéristique mesurée ou plusieurs paramètres combinés dudit paramètre caractéristique mesuré, de ladite valeur mesurée et de ladite distance d associée, on détermine, par identification à l'évolution de ladite application représentée par simulation théorique, les paramètres inconnus dimensionnels ou caractéristique du milieu ou caractéristique de l'hétérogénéité et lesdits paramètres combinés inconnus.

Selon un mode de réalisation particulier de l'invention, le phénomène physique lié aux mesures étant une perturbation du champ électrique, les paramètres caractéristiques étant alors des résistivités électriques,

– on représente par simulation théorique préalable à la mesure l'évolution des résistivités électriques du milieu $R_H$, de l'hétérogénéité $R_e$ et de la résistivité mesurée $R_a$ pour une distance d émetteur-récepteur donnée dans le cas de différents paramètres dimensionnels p du milieu par rapport à l'hétérogénéité

– on mesure initialement la résistivité électrique du milieu ou de l'hétérogénéité

– on mesure successivement avec ledit ensemble de mesure placé au fond du puits sensiblement parallèlement à ladite hétérogénéité une valeur de résistivité $R_a$ pour une distance émetteur-récepteur donnée

– on détermine les paramètres dimensionnels, la résistivité du milieu ou de l'hétérogénéité ou les paramètres combinés inconnus.

Avantageusement on identifie préalablement aux mesures la configuration de ladite hétérogénéité par rapport au milieu géologique.

Selon une caractéristique particulière, on utilise deux paramètres combinés, le premier paramètre combiné $R_a/R_h$ étant le rapport de ladite valeur caractéristique mesurée $R_a$ au paramètre caractéristique

du milieur $R_H$, le deuxième paramètre combiné $R_h/R_e$ étant le rapport dudit paramètre caractéristique du milieu $R_h$ audit paramètre caractéristique de l'hétérogénéité $R_e$, le première paramètre combiné correspondant à une anomalie du paramètre caractéristique, le second paramètre combiné correspondant à un contraste du paramètre caractéristique.

Avantageusement on mesure initialement la résistivité du milieu ou la résistivité de l'hétérogénéité au moyen dudit ensemble de mesure.

Dans un mode de fonctionnement particulièrement bien adopté à ladite méthode, on effectue la détermination des paramètres caractéristiques à l'aide desdites mesures de résistivité au moyen dudit ensemble de mesure de manière à guider la direction du forage effectué dans des formations géologiques.

L'invention sera bien comprise à la lecture de la description d'exemples de réalisation, illustrés par les dessins annexés parmi lesquels :

– la figure 1, représente une formation géologique comportant une interface simple entre un milieu et une hétérogénéité, le sondage traversant le milieu,

– la figure 2, est une représentation graphique de l'évolution des paramètres caractéristiques, dimensionnels du milieu et de l'hétérogénéité, et de la distance émetteur-détecteur dans la configuration de la figure 1,

– la figure 3, schématise une formation géologique comportant une intercalation (hétérogénéité) dans un milieu, traversé par le sondage,

– la figure 4, illustre l'évolution des paramètres de la caractéristique, dimensionnel du milieu et de l'hétérogénéité, et de la distance émetteur-détecteur, dans la configuration de la figure 3,

– la figure 5, schématise une formation géologique comportant une hétérogénéité à l'intérieur de laquelle se trouve un sondage,

– la figure 6, montre l'évolution des paramètres de la caractéristique, dimensionnel du milieu et de l'hétérogénéité, et de la distance émetteur-détecteur, dans la configuration de la figure 5,

– la figure 7, représente l'ensemble de mesure selon l'invention qui permet la mise en oeuvre de la méthode selon l'invention, et

– la figure 8, représente un mode de mise en oeuvre de l'ensemble de mesure selon la figure 7.

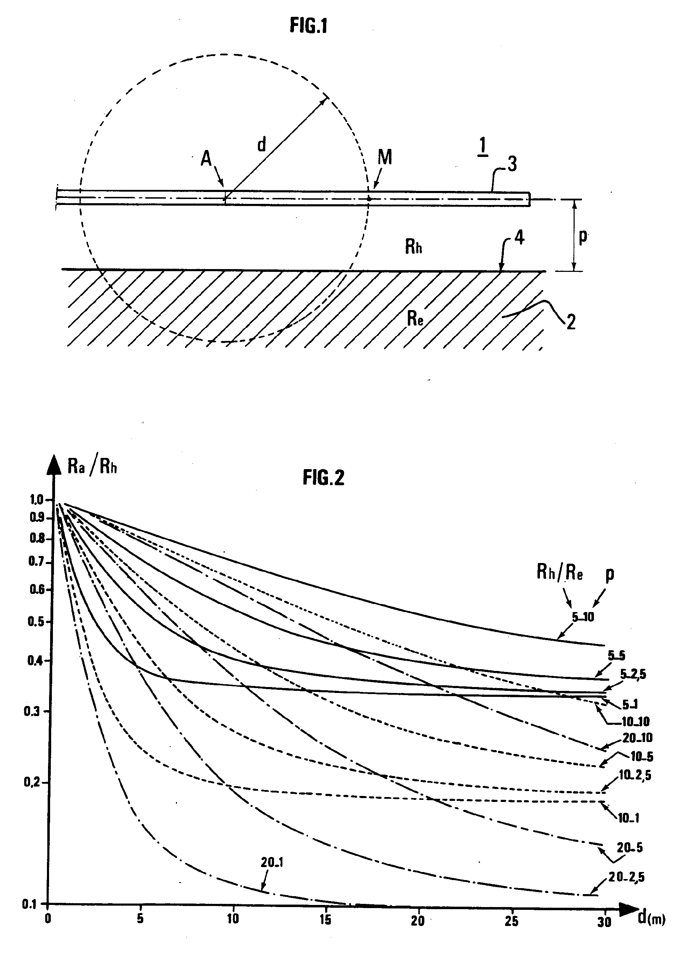

Sur la figure 1, qui schématise une formation géologique, la référence 1 désigne un milieu traversé par un sondage 3, tel un puits ou un drain. A une extrémité de ce milieu 1 se trouve une hétérogénéité 2.

Dans le cas où l'invention est par exemple appliquée à la production pétrolière, le milieu 1 peut être une roche comportant de l'huile et l'hétérogénéité 2 peut être cette même roche mais comportant de l'eau.

L'hétérogénéité 2, qui peut être située soit latéralement, soit en dessus, soit en dessous du milieu 1, définit avec ce dernier une interface qui ne coupe pas le sondage dans la zone de détection de l'ensemble de mesure situé dans le sondage 3.

L'ensemble de mesure comporte au moins un émetteur A et au moins des détecteurs M, disposés sensiblement le long d'une droite à proximité l'un de l'autre, chaque détecteur présentant sur ladite droite une distance de croissance par rapport audit émetteur.

L'ensemble de mesure vise à obtenir un paramètre caractéristique ayant un contraste pour le milieu et l'hétérogénéité, cela de manière à pouvoir distinguer le milieu de l'hétérogénéité. La distance séparant le sondage 3 de l'hétérogénéité 2 ou de son interface avec le milieu est notée p.

Dans les représentations graphiques des figures 2, 4 et 6, le paramètre caractéristique est une résistivité électrique et l'ensemble de mesure tel que schématisé aux figures 1, 3 et 5 permet le calcul de ce paramètre.

Les différentes courbes (figures 2, 4, 6) ont été obtenues préalablement par calcul théorique en supposant une injection ponctuelle de courant à partir de l'émetteur A, un potentiel électrique nul "à l'infini", une répartition axisymétrique du courant (répartition à symétrie cylindrique dont l'axe qui passe par l'émetteur A est perpendiculaire à l'interface 4), et une conservation du courant électrique.

Les courbes représentées à la figure 2 montrent l'évolution simulée de la valeur mesurable ou apparente $R_a$ de la résistivité, rapportée à la résistivité $R_h$ du milieu, pour différentes distances p entre l'hétérogénéité et le sondage, et pour différents contrastes de résistivité $R_h/R_e$ (rapport de la résistivité du milieu à la résistivité de l'hétérogénéité), en fonction de la distance séparant l'émetteur du détecteur.

Les différentes courbes sont référencées par la juxtaposition de deux nombres séparés par un tiret. Le premier nombre (sur la gauche) est relatif au contraste de résistivité entre le milieu et l'hétérogénéité $R_h/R_e$ et le second nombre (sur la droite) est relatif à un paramètre dimensionnel exprimé en mètres.

Sur les figures 1 et 2 ce paramètre dimensionnel p correspond à l'espacement entre le sondage 3 et l'hétérogénéité 2.

Le réseau de courbes met bien en évidence le fait que la valeur mesurée de la résistivité $R_a$ rapportée à la résistivité du milieu $R_h$ dépend au moins de deux paramètres indépendants $R_h/R_e$ et p et montre, qu'ayant défini une courbe des valeurs $R_a$ mesurées de la résistivité en fonction de la distance émetteur-détecteur, on peut déterminer les deux paramètres $R_h/R_e$ et p.

La valeur de la résistivité normale apparente est calculée comme pour tous les ensembles de mesures effectuant des mesures normales, à partir du potentiel mesuré par le détecteur M par rapport au potentiel à l'infini, pour une intensité de courant donnée passant par l'émetteur A.

Principe de la mesure :

Pour différentes distances de l'émetteur A et du détecteur M, on effectue une mesure de la résistivité $R_a$ du milieu, on détermine la résistivité $R_h$ du milieu et l'on place sur la figure 2 (obtenue préalablement par simulation théorique) les différentes valeurs mesurées $R_a$ rapportées à la résistivité du milieu $R_h$ en fonction de la distance émetteur-détecteur.

Les points des mesures étant placés sur la figure 2, on trace la courbe passant par ces points, puis on identifie au réseau de courbes obtenu par simulation, par superposition, interpolation, ou extrapolation du contraste de résistivité $R_h/R_e$ et de la distance p entre l'hétérogénéité et le sondage de ces courbes simulées, le contraste $R_h/R_e$ et la distance p pour cette courbe comportant ces points de mesures.

On pourra réaliser l'identification de la courbe de mesure en utilisant différents transparents ou calques sur chacun desquels est disposée une partie du réseau de courbes simulées pour lequel un seul des paramètres varie.

On peut, par exemple, sur ces transparents à superposer à la courbe de mesure, représenter les évolutions de la valeur mesurable, en fonction de la distance émetteur-détecteur pour différentes distances entre l'hétérogénéité et le sondage, en supposant pour chacun des transparents un contraste de résistivité $R_h/R_e$ constant.

On pourrait aussi représenter les évolutions de la valeur mesurable en fonction de la distance émetteur-détecteur pour différents contrastes de résistivité $R_h/R_e$, en supposant pour chacun des transparents la distance entre l'hétérogénéité et le sondage constante.

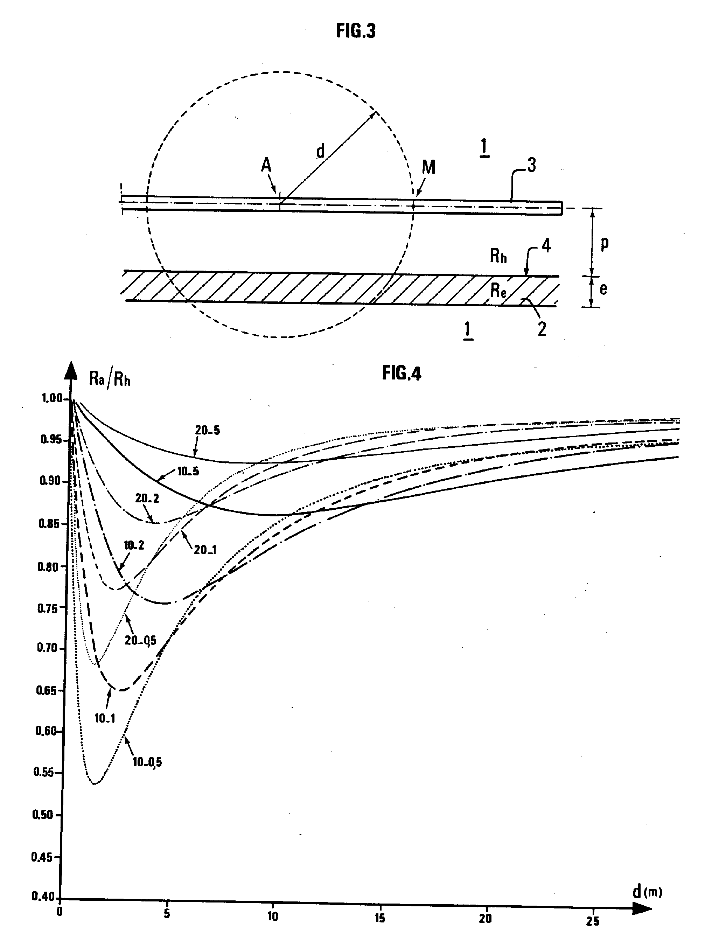

La figure 3 schématise une formation géologique, comportant un milieu 1 qui peut contenir de l'huile et dont la résistivité est $R_h$. Ce milieu comporte un trou de sondage 3 dans lequel est placé l'ensemble de mesures. Ce trou de sondage se trouve situé à une distance p d'une intercalation ou hétérogénéité 2 plane, sensiblement parallèle au trou de sondage 3 et ayant une épaisseur e. Du côté opposé au sondage 3 par rapport à l'intercalation 2 se trouve le milieu 1. On appelle $R_e$ la résistivité de l'intercalation ou de l'hétérogénéité 2 et $R_a$ la valeur de la résistivité mesurée par le détecteur M lorsque l'émetteur A, séparé d'une distance d, injecte ponctuellement un courant pour permettre la mesure de la résistivité $R_a$.

La figure 4 illustre l'évolution simulée de la valeur mesurée de la résistivité $R_a$, dans une formation géologique telle que celle illustrée par la figure 3, en fonction : de la distance d entre l'émetteur et le détecteur, de la distance p séparant le sondage 3 de l'intercalation 2, pour un contraste de résistivité $R_h/R_e$ entre le milieu 1 et l'hétérogénéité 2 égal à dix et pour une épaisseur e de l'intercalation 2 variable.

Comme sur la figure 2 les courbes sont référencées par deux nombres séparés par un tiret. Le premier de ces nombres est relatif au contraste de résistivité $R_h/R_e$ entre le milieu et l'hétérogénéité, le second à la distance p séparant le sondage 3 de l'intercalation 2.

De la même manière que l'on utilise la figure 2 pour déterminer le contraste de résistivité $R_h/R_e$ et la distance p, on utilise la figure 4 pour déterminer ces mêmes inconnues dans le cas d'une formation géologique comportant une intercalation comme dans la figure 3. Cependant, avec une sonde normale de mesure de résistivité sans focalisation de courant, il est difficile, surtout dans la pratique, de définir le contraste de résistivité $R_h/R_e$ quand on ne connait pas l'épaisseur de l'intercalation e, ou de définir l'épaisseur de l'intercalation quand on ne connait pas le contraste de résistivité. La focalisation de courant électrique est obtenue par des électrodes focalisatrices, et permet de focaliser les lignes de courant au voisinage de l'émetteur. De cette manière, une portion de l'espace seulement est atteint par ces lignes et les informations que l'on obtient du détecteur sont sélectives. En absence de focalisation, l'émetteur injecte quasi-sphériquement le courant dans les formations voisines.

En effet, par exemple, pour un contraste de résistivité de 20 et une épaisseur d'intercalation de 0,5 mètre, on obtient par simulation presque la même courbe qu'avec un contraste de résistivité de 10 et une épaisseur d'intercalation de 1 mètre.

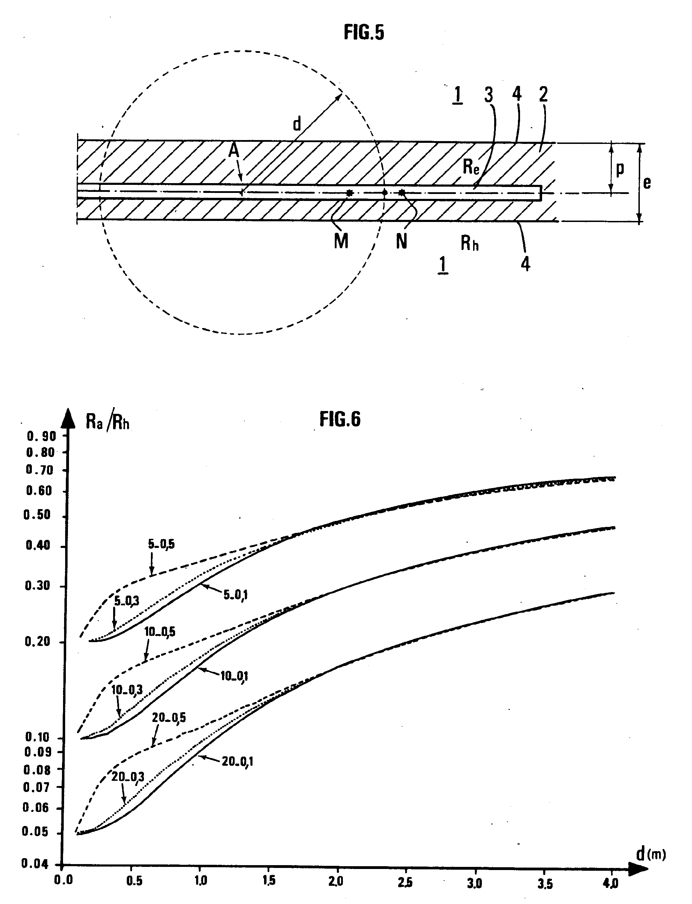

La figure 5 schématise une formation géologique comportant un milieu 1 situé de part et d'autre d'une hétérogénéité ou intercalation 2 dans laquelle est situé un sondage 3 dont l'axe est sensiblement parallèle au toit 4 de l'intercalation.

Le sondage 3 contient un ensemble de mesure latérale qui est adapté à mesurer la valeur apparente de la résistivité latérale. Cet ensemble de mesure comporte un émetteur de courant A et un détecteur, ayant deux électrodes M et N situées à une distance moyenne d de l'émetteur.

La valeur de la résistivité latérale apparente est calculée à partir de la différence de potentiel existante entre les deux électrodes M et N. Par un tel ensemble de mesure, les formations mesurées s'étendent plutôt latéralement.

Cette disposition géométrique de sondage dans une intercalation comme celles représentées aux figures 1 et 3 est caractéristique des dispositions où l'on effectue des mesures pour permettre la progression d'un forage.

La figure 6 est une illustration de la simulation de l'évolution de la valeur de résistivité apparente $R_a$ rapportée à la résistivité $R_h$ du milieu 1, en fonction de la distance d émetteur-détecteur associée à la valeur apparente $R_a$ pour une épaisseur d'intercalation e fixée arbitrairement à un mètre, un contraste de résistivité et une distance entre le sondage et le milieu variables. Même avec un ensemble de mesure latéral, il n'est pas possible de distinguer l'éponte 4 supérieur de l'éponte 4 inférieur.

Les courbes représentées sur la figure 6 ont été obtenues avec un espacement entre les électrodes M et N de 10 cm. Il est bien connu de l'homme de l'art d'adapter cet espacement aux configurations des formations. De la même manière que l'on a simulé l'évolution de la valeur de la résistivité apparent $R_a$ rapportée à la résistivité du milieu $R_h$ en fonction de la distance d émetteur-détecteur avec un espacement entre les électrodes M et N de 10 cm on pourra simuler cette évolution pour d'autres espacements.

Cette distinction des épontes n'est pas toujours nécessaire, car généralement la pendagémétrie des intercalations est connue et il existe des dispositifs permettant de contrôler en continu la déviation du forage, par exemple en mesurant par des magnétomètres et des accéléromètres : l'azimut (angle entre le plan vertical contenant la colonne de forage et le plan vertical contenant la direction de forage), l'inclinaison (angle entre l'axe de la colonne et le plan horizontal), ainsi que leur variation au cours de l'avancement du sondage.

De même, au cours de l'avancement du forage et des déviations imposées au trépan pour guider le forage, il est possible de suivre l'évolution des valeurs mesurées de la résistivité pour savoir si la direction de progression du forage est toujours correcte.

Comme précédemment chacune des courbes de la figure 6 est référencée par un premier nombre correspondant au contraste de résistivité entre le milieu et l'hétérogénéité, ce premier nombre étant suivi d'un tiret, puis d'un second nombre représentant la distance p, entre le sondage 3 et l'éponte 4, exprimée en mètres.

Comme dans la configuration géométrique représentée à la figure 4, pour laquelle on utilise un ensemble de mesure exempt de moyen de focalisation et servant à l'établissement des courbes de la figure 6, il est impossible de définir le contraste de résistivité $R_h/R_e$ lorsque l'on ne connait pas l'épaisseur e de l'intercalation.

Toutefois, comme sur la figure 4, les valeurs mesurées permettent de connaître la relation existante entre le contraste de résistivité $R_h/R_e$ et l'épaisseur de l'intercalation e.

Il apparaît nettement sur la figure 6, pour laquelle l'épaisseur e de l'intercalation est de 1 mètre, qu'une mesure de la valeur $R_a$ rapportée à la résistivité de la formation $R_h$ effectuée pour une distance d émetteur-détecteur supérieure à 2 mètres, permet de connaître le contraste de résistivité, et qu'associée à une mesure de la valeur $R_a$ rapportée à $R_h$ effectuée pour une distance d inférieure à 2 mètres, par exemple 0,5 mètre, donne la distance p entre le sondage 3 et l'éponte 4. Pratiquement, la distance p n'est pas donnée par rapport à l'une des deux épontes, mais la distance p donne l'excentration du sondage 3 dans l'intercalation.

Pour les valeurs $R_a$ associées à la distance d et pour les valeurs p ne figurant pas sur la figure 6, il est possible d'interpoler et/ou d'extrapoler les courbes existantes pour certaines valeurs de p et/ou de compléter la simulation représentée à la figure 6.

Les représentations graphiques des figures 2 et 4 supposent, pour la définition rapide de la résistivité de l'hétérogénéité et de la distance entre le sondage et l'éponte de l'hétérogénéité, que l'on connait déjà la résistivité du milieu, ce que l'on obtient plus facilement lorsque le sondage traverse ce milieu.

Cependant on pourra aussi représenter la valeur mesurée de la résistivité rapportée à la résistivité de l'hétérogénéité en fonction de la distance d séparant l'émetteur du détecteur de courant. Ceci s'appliquerait par exemple à la configuration géométrique illustrée par la figure 5. Toutefois, dans la pratique, comme le sondage coupe le milieu 1, il est possible de connaître sa résistivité.

Au lieu d'identifier avec une figure, telle les figures 2, 4 et 6, le sondage et l'interface de l'hétérogénéité, on pourra simuler par un calculateur l'évolution de la valeur mesurée en fonction de la distance d entre l'émetteur et le détecteur pour différents paramétres tels que $R_h/R_e$, p et identifier ces paramètres par un programme de reconnaissance adapté. On pourra aussi utiliser des tables de valeurs simulées dans certains cas de configuration.

On pourra encore réaliser d'autre simulation graphique en reprenant les paramètres ci-avant utilisés, tels que $R_a/R_h$, d, p, $R_h/R_e$.

On constate que les représentations des courbes présentées aux figures 3, 4, 6 tendent vers une asymptote horizontale. Ces courbes présentent un rapprochement vers ces asymptotes selon des pentes liées au rapport Rh/Re plus ou moins grand.

Il faudra donc savoir adapter une distance émetteur-récepteur bien précise pour couvrir le tracé de la courbe et ne pas obtenir des points proches de l'asymptote qui ne réflètent pas l'influence de l'hétérogénéité. Ainsi pour des valeurs bien choisies de distance émetteur-récepteur, on peut se passer de savoir dans quelle configuration (figures 1, 3 ou 5) les mesures sont effectuées.

Ainsi une disposition régulière sensiblement tous les 10 cm sur une longueur de 10 mètres permet de couvrir les trois cas de figures.

De la même manière si les distances sont considérablement choisies, seulement quelques points seront suffisants pour déduire la superposition à la courbe théorique.

On pourra transposer la méthode de détermination de paramètres de résistivité, tels celui du milieu et/ou de l'hétérogénéité, et de paramètres dimensionnels, tels celui de distance entre le sondage et l'interface de l'hétérogénéité avec le milieu, à la détermination de paramètres d'une caractéristique autre qu'électrique.

Cet autre paramètre caractéristique s'appuie sur des hypothèses sensiblement similaires à celles utilisées pour déterminer les résistivités.

Ainsi, ce paramètre caractéristique, ou plus généralement ladite application, utilise pour sa définition des hypothèses d'un émetteur ponctuel d'un

champ $\vec{X}$ dérivant d'un potentiel

$$U, \quad \vec{X} = -\overrightarrow{grad}\ U,$$

ce potentiel ayant une valeur nulle à l'infini, ce champ X ayant une répartition asymétrique dont l'axe passe par l'émetteur A et est perpendiculaire à l'interface 4, ce champ étant par ailleurs conservatif dans l'espace.

$$(div\ \vec{X} = 0 \quad ou \quad \Delta U = 0)$$

La répartition asymétrique du champ $\vec{X}$ est la conséquence des symétries des conditions aux limites, des hététogénéités stratifiés du milieu, et du type d'injection de courant.

Pour résoudre $\Delta U = 0$, on exprime le potentiel U en coordonnées cylindriques (r, z), l'axe OZ étant perpendiculaire aux différentes couches de formation et ayant pour origine le point d'injection du courant.

On applique au potentiel ensuite la méthode dite "de séparation des variables" et la méthode dite "de variation de la constante" pour résoudre le Laplacien du potentiel (en coordonnées polaires) et donner la solution générale du potentiel.

La solution complète du potentiel est donnée par la solution générale et une solution particulière caractérisant le type d'injection de courant. Les conditions aux limites, telles que le potentiel nul à l'infini, la continuité du potentiel aux interfaces, la continuité du flux normal de la densité de courant aux interfaces, permettent d'obtenir pour chaque configuration des formations l'expression du potentiel. L'expression du potentiel, le type de sonde de mesure (normale, latérale) permettent d'exprimer une application caractéristique mettant en relation les paramètres de résistivité du milieu de l'hétérogénéité, les paramètres dimensionnels du milieu et/ou de l'hétérogénéité, la valeur caractéristique mesurée ainsi que la distance émetteur-détecteur associée et/ou des paramètres combinés.

Il est connu de l'homme de l'art de résoudre $\Delta U = 0$ pour certaines configurations géologiques et des méthodes utilisées sont décrites, par exemple, dans les articles :
"Sur la distribution électrique potentielle autour d'une prise de terre dans un terrain à couches horizontales homogènes et isotropes" STEFANO S.S. Journal de Physique et du Radium, 1930, série 7, pages 132-140, et

"The application of linear filter theory to the direct interpretation of geoelectrical resistivity sounding measurement", GOSH D.P., Geophysical Prospecting, 1971, 19, pages 192-217.

Cet autre champ peut être, par exemple, un champ magnétique, tel un champ magnétique constant.

Lorsque le paramètre caractéristique est, par exemple, la résistivité, la tension, le courant électrique, le paramètre transposé doit être analogue au paramètre initial.

D'une manière générale, après transposition, la résistivité apparente est appelée valeur mesurée de la caractéristique (pour une certaine distance émetteur-détecteur), la résistivité du milieu est appelée le paramètre caractéristique du milieu, la résistivité de l'hétérogénéité est appeléele paramètre caractéristique de l'hétérogénéité. Dans les exemples d'utilisation de la méthode précédemment décrits, les courbes sont paramétrées en fonction de la distance p entre le sondage 3 et l'interface 4 entre le milieu et l'hétérogénéité. Lorsque les configurations géologiques du milieu et de l'hétérogénéité seront différentes, la distance p pourra être définie autrement et d'autres paramètres dimensionnels pourront être détectés par les mesures effectuées. Par suite, la distance sondage-interface sera aussi nommée paramètre dimensionnel.

Dans les exemples d'utilisation de la méthode précédemment décrits, on simule l'évolution d'une application dépendante de la valeur mesurable de la caractéristique, de la distance émetteur-détecteur, du paramètre dimensionnel p du milieu, de paramètres caractéristiques du milieu et de l'hétérogénéité en fonction de la valeur mesurable rapportée au paramètre caractéristique du milieu et de la distance émetteur-détecteur pour des quantités variables du paramètre caractéristique du milieu rapporté au paramètre caractéristique de l'hétérogénéité et des quantités variables du paramètre dimensionnel.

On appelle paramètre combiné de plusieurs paramètres, les relations liant ensemble au moins deux paramètres, par exemple le rapport des paramètres caractéristiques du milieu et de l'hétérogénéité ou le rapport de la valeur mesurable et du paramètre caractéristique du milieu. On ne sortira pas du cadre de l'invention en combinant des paramètres par de telles relations et en exprimant ladite application avec ces paramètres combinés. De même les axes des représentations graphiques pourront comporter d'autres paramètres combinés.

Pour obtenir les différentes mesures de la valeur apparente de la résistivité, on pourra soit utiliser un émetteur et un détecteur de courant dont l'espacement est variable, soit utiliser une pluralité d'émetteurs et de détecteurs de courant mis en fonctionnement de telle manière que l'espace séparant l'émetteur du détecteur en action est variable.

On pourra mesurer le paramètre caractéristique du milieu ou de l'hétérogénéité, tel leur résistivité, au moyen d'instruments descendus dans le sondage éventuellement avec l'ensemble de mesure comportant ces émetteur(s) et détecteur(s).

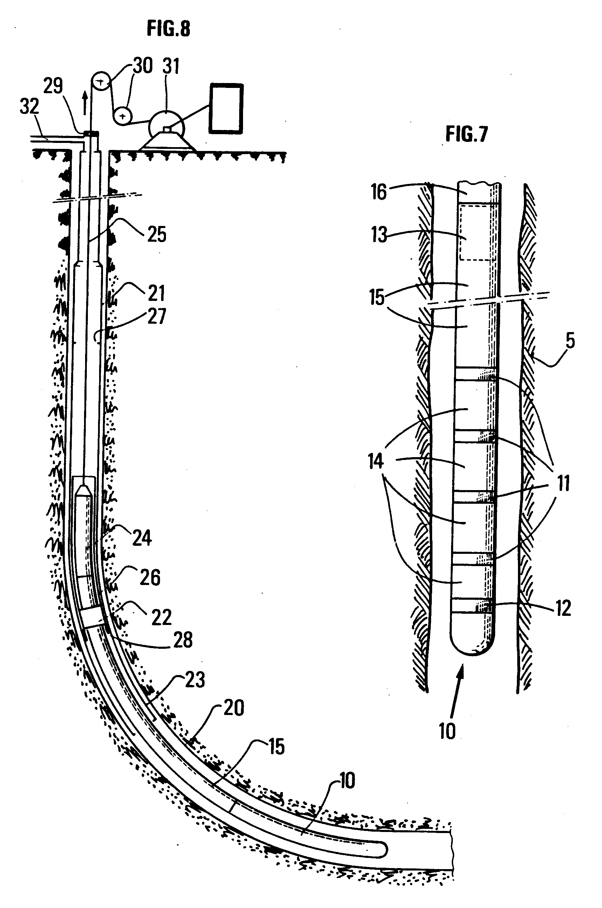

Sur la figure 7, représente un exemple non limitif d'ensemble de mesure 10 qui permet la mise en oeuvre de la méthode selon l'invention qui s'applique à la détermination de paramètres électriques tels la résistivité.

L'ensemble de mesure est disposé dans un sondage situé dans une formation géologique souterraine 5 que l'on doit explorer, notamment par la méthode selon l'invention, à partir de la surface du sol, grâce à un puits.

Cet ensemble de mesure comporte une pluralité d'électrodes 11 et 12 séparées entre elles par un matériau électriquement isolant et rigide qui peut être avantageusement un matériau en composite, tel des fibres de verre noyées dans une résine époxyde. Ces électrodes sont par exemple annulaires et coaxiales à l'ensemble de mesure. Ces électrodes 11 et 12 comportent une électrode émettrice de courant 12 et des électrodes détectrices de courant 11. L'électrode émettrice ou émetteur est reliée à un générateur de courant, les électrodes détectrices ou détecteurs sont reliées à un dispositif de multiplexage 13 ou de résistivité qui regroupe les informations de tension ou de courant mesuré et les communiquent à la surface du sol par une liaison unique de mesure.

Le courant fournit par l'émetteur 12 n'est pas focalisé, comme cela se fait pour certaines diagraphies électriques, telles celles exécutées par les "latérolog" (marque déposée de Schlumberger), mais on ne sortirait pas du cadre de l'invention en utilisant un ou plusieurs émetteurs focalisés.

Les détecteurs 11 sont disposés de telle manière que leurs espacements avec l'émetteur 12 n'est pas constant. Selon le type de disposition géométrique de l'hétérogénéité et du milieu, et grâce aux matériaux de séparations isolants que l'on peut utiliser, tels des manchons 14 en fibres de verre, on pourra ajuster par des rallonges appropriées les distances séparant les détecteurs de l'émetteur.

L'ensemble de mesure comporte en outre une rallonge isolante 15 qui permet, par exemple lorsqu'on le descend dans un puits au moyen d'un tubage 16, d'écarter ledit ensemble du tubage et ainsi, d'éviter des perturbations électriques (retour au tubage) qui troubleraient les mesures.

Selon la taille des hétérogénéités et leur disposition dans les formations géologiques et par rapport au sondage, on pourra être amené à utiliser des manchons très longs pouvant conduire à une longueur de l'ensemble voisine de 150 mètres.

Au lieu d'avoir un seul émetteur et plusieurs détecteurs, on pourra utiliser un détecteur et plusieurs émetteurs disposés de manière que leurs distances avec le détecteur soient variables.

On pourra avantageusement avoir un très grand nombre de détecteurs de manière à pouvoir sélectionner de bonnes mesures pour la détermination des paramètres tels que ceux mentionnés dans la méthode précédemment exposée.

L'ensemble de mesure pourra comporter un émetteur et/ou un détecteur supplémentaire, par exemple un émetteur focalisant, pour mesurer la résistivité du milieu ou de l'hétérogénéité dans lequel se trouve l'ensemble de mesure.

La figure 8 illustre un exemple de mise en oeuvre non limitatif d'un dispositif comportant un ensemble de mesure selon l'invention. L'ensemble de mesure 10 est descendu dans le puits 20 au moyen du tubage 21 auquel cet ensemble 10 est relié par une rallonge 15 et une embase 22. Au cours de la descente, l'ensemble de mesure 10 se situe dans un carter protecteur 23. On ne sortira pas du cadre de l'invention en supprimant ce carter protecteur. En fin de descente de l'ensemble de mesure et du tubage, on descend dans le tubage 21, par exemple par pompage, un connecteur électrique 24 relié par un câble 25 à la surface du sol et muni d'une barre de charge. Ce connecteur vient s'arrimer sur l'embase 22 et coopérer avec une fiche électrique 26 complémentaire du connecteur et reliée audit ensemble de mesure.

Lorsque la liaison du connecteur 24 avec la fiche 26 et l'embase 22 est exécutée, l'embase 22, qui est initialement maintenue par des ergots 27, dont l'action est effaçable à distance, peut être descendue jusqu'à entrer en butée avec l'épaulement 28 dans une position adaptée aux mesures de l'ensemble 10.

Pour effectuer le pompage du connecteur 24, l'extrémité supérieure du tubage 21 est pourvue d'un presse-étoupe 29 au travers duquel passe le câble qui circule ensuite sur des poulies de renvoi 30 vers un treuil enrouleur 31. L'extrémité supérieure du tubage est aussi pourvue d'une canalisation 32 reliée à un groupe de pompage qui permet la circulation du connecteur 24.

Lorsque l'on voudra réaliser plusieurs stations de mesure dans un sondage, on pourra utiliser un raccord à fenêtre latérale (plus généralement connu sous la terminologie anglaise de "Side Entry Sub" (S.E.S.), tel que décrit, par exemple, dans les brevets français 2.501.777, 2.522.059, 2.564.893, 2.547.861.

Lorsque le diamètre du trou de sondage sera grand devant de diamètre extérieur des électrodes de l'émetteur et du détecteur, et notamment lorsque les boues de forage seront particulièrement conductrices, on pourra utiliser un élargisseur de sonde, tel celui décrit dans la demande de brevet français EN 87/02 757.

## Revendications

1. Méthode de détermination, dans un milieu géologique comportant au moins une hétérogénéité, d'au moins un paramètre caractéristique du milieu ou de l'hétérogénéité et au moins un paramètre dimensionnel p du milieu ou de l'hétérogénéité, caractérisée en ce qu'un ensemble de mesure étant descendu au fond d'un puits et comportant au moins un émetteur coopérant avec au moins deux détecteurs disposés sensiblement le long d'une droite, chaque détecteur présentant sur ladite droite une distance croissante par rapport audit émetteur, de manière à ce que pour effectuer une mesure, on associe l'émetteur à un détecteur, séparés par une distance d donnée, l'ensemble de mesure fournissant alors au moins une valeur d'un paramètre caractéristique pour ladite distance d, méthode par laquelle on effectue les étapes suivantes :

– on définit une application caractéristique du phénomène physique associé aux paramètres caractéristiques utilisés, cette application définissant une relation entre ladite distance d émetteur-récepteur, ladite valeur du paramètre caractéristique mesuré, ledit paramètre dimensionnel p du milieu ou de l'hétérogénéité, et ledit paramètre caractéristique du milieu, ou de l'hétérogénéité, et un ou plusieurs paramètres combinés desdits paramètres dimensionnels, paramètres caractéristiques du milieu de l'hétérogénéité, et de ladite distance d ou de ladite valeur mesurée,

– on représente par simulation théorique préalable à la mesure, l'évolution des différents paramètres, valeurs et distance liés par ladite application,

– on mesure initialement un desdits paramètres dimensionnels, ou caractéristique du milieu ou caractéristique de l'hétérogénéité, ou un paramètre combiné de ces paramètres dimensionnels et caractéristiques,

– on mesure successivement avec ledit ensemble de mesure, indépendamment de sa position dans le puits pour une distance d émetteur-récepteur donnée, une valeur caractéristique, et

– au moyen dudit paramètre caractéristique ou dimensionnel initialement mesuré, de ladite valeur caractéristique mesurée et de ladite distance d émetteur-récepteur associée à ladite valeur caractéristique mesurée ou plusieurs paramètres combinés dudit paramètre caractéristique mesuré, de ladite valeur mesurée et de ladite distance d associée, on détermine, par identification à l'évolution de ladite application représentée par simulation théorique, les paramètres inconnus dimensionnels ou caractéristique du milieu ou caractéristique de l'hétérogénéité et lesdits paramètres combinés inconnus.

2. Méthode de détermination selon la revendication 1, caractérisée en ce que le phénomène physique lié aux mesures étant une perturbation du champ électrique, les paramètres caractéristiques étant alors des résistivités électriques,

– on représente par simulation théorique préalable à la mesure l'évolution des résistivités électriques du milieu $R_H$, de l'hétérogénéité $R_e$ et de la résistivité mesurée $R_a$ pour une distance d émetteur-récepteur donnée dans le cas de différents paramètres dimensionnels p du milieu par rapport à l'hétérogénéité

– on mesure initialement la résistivité électrique du milieu ou de l'hétérogénéité

– on mesure successivement avec ledit ensemble de mesure placé au fond du puits sensiblement parallèlement à ladite hétérogénéité une valeur de résistivité $R_a$ pour une distance émetteur-récepteur donnée

– on détermine les paramètres dimensionnels, la résistivité du milieu ou de l'hétérogénéité ou les paramètres combinés inconnus,

– à partir d'au moins trois valeurs mesurées $R_a$, on identifie la courbe correspondant aux conditions de mesure sur l'évolution des paramètres obtenus théoriquement.

3. Méthode de détermination selon la revendication 2, caractérisée en ce qu'on identifie préalablement aux mesures la configuration de ladite hétérogénéité par rapport au milieu géologique.

4. Méthode de détermination selon l'une des revendications 1 à 3, caractérisée en ce qu'on utilise pour la représentation par simulation deux paramètres combinés, le premier paramètre combiné $R_a/R_h$ étant le rapport de ladite valeur caractéristique mesurée $R_a$ au paramètre caractéristique du milieur $R_H$, le deuxième paramètre combiné $R_h/R_e$ étant le rapport dudit paramètre caractéristique du milieu $R_h$ audit paramètre caractéristique de l'hétérogénéité $R_e$, le première paramètre combiné correspondant à une anomalie du paramètre caractéristique, le second paramètre combiné correspondant à un contraste du paramètre caractéristique.

5. Méthode de détermination selon l'une des revendications 1 à 4, caractérisée en ce qu'on mesure initialement la résistivité du milieu ou la résistivité de l'hétérogénéité au moyen dudit ensemble de mesure.

6. Méthode de détermination selon l'une des revendications 1 à 5, caractérisée en ce que, suite à la simulation de ladite application,

– on représente graphiquement son évolution, en fonction de la variation simulée de résistivité mesurée et de la distance émetteur-récepteur associée à cette valeur, et

– on identifie par superposition à ladite représentation graphique lesdits paramètres caractéristiques.

7. Méthode de détermination selon l'une des revendications 1 à 6, caractérisée en ce qu'on effectue la détermination des paramètres caractéristiques à l'aide desdites mesures de résistivité au moyen dudit ensemble de mesure de manière à guider la direction du forage effectué dans des formations géologiques.

## Patentansprüche

1. Verfahren, um in einer geologischen Umgebung mit wenigstens einer Heterogenität wenigstens einen für die Umgebung oder die Heterogenität charakteristischen Parameter und wenigstens einen Dimensionsparameter p der Umgebung oder der Heterogenität zu bestimmen, dadurch gekennzeichnet, daß eine Meßanordnung zum Boden eines Bohrlochs hinabgelassen wird und wenigstens einen Sender umfaßt, der mit wenigstens zwei Detektoren zusammenwirkt, die im wesentlichen längs einer Geraden angeordnet sind, wobei jeder Detektor auf dieser Geraden eine bezüglich dieses Senders zunehmende Entfernung derart hat, daß zur Durchführung einer Messung man diesem Sender einen durch eine gegebene Entfernung d getrennten Detektor zuordnet, wobei die Meßanordnung dann wenigstens einen Wert eines charakteristischen Parameters für diese Entfernung d liefert, wobei man das Verfahren entsprechend den folgenden Stufen durchführt:

– man definiert eine charakteristische Anwendung des physikalischen, den verwendeten charakteristischen Parametern zugeordneten Phänomens, wobei diese Anwendung eine Beziehung definiert zwischen dieser Entfernung d des Sender-Empfängers, diesem Wert des gemessenen charakteristischen Parameters, diesem Dimensionsparameter p der Umgebung oder der Heterogenität und diesem charakterischen Parameter der Umgebung oder der Heterogenität sowie einem oder mehreren kombinierten Parametern dieser Dimensionsparameter, charakteristischen Parametern der Umgebung der Heterogenität sowie dieser Entfernung d oder dieses gemessenen Wertes,

– man stellt durch theoretische Simulation vor der Messung die Entwicklung der verschiedenen Parameter, Werte und Entfernung, die durch diese Anwendung verknüpft sind, dar,

– man mißt zunächst einen dieser Dimensionsparameter oder eine Charakteristik der Umgebung oder Charakteristik der Heterogenität oder einen kombinierten Parameter dieser Dimensionsparameter und charakteristischen Parameter,

– man mißt nacheinander mit dieser Meßanordnung unabhängig von der Position im Bohrloch für eine gegebene Entfernung d von Sender-Empfänger einen charakteristischen Wert und

– mittels dieses charakteristischen- oder ursprünglich gemessenen Dimensionsparameters dieses gemessenen charakteristischen Werts und dieser Entfernung Sender-Empfänger, in Zuordnung zu diesem gemessenen charakteristischen Wert oder mehreren kombinierten Parametern dieses gemessenen charakteristischen Wertes dieses gemessenen Wertes und der zugeordneten Entfernung d bestimmt man durch Identifikation mit der Entwicklung dieser durch theoretische Simulation dargestellten Anwendung die unbekannten Dimensions- oder charakteristischen Parameter der Umgebung oder der Charakteristik der Heterogenität und dieser unbekannten kombinierten Parameter.

2. Bestimmungsverfahren nach Anspruch 1, **dadurch gekennzeichnet,** daß das physikalische mit den Messungen verknüpfte Phänomen eine Störung des elektrischen Feldes ist, wobei die charakteristischen Parameter dann elektrische spezifische Widerstände sind,

– man stellt durch theoretische Simulation vor der Messung die Entwicklung der elektrischen spezifischen Widerstände der Umgebung $R_H$, der Heterogenität $R_e$ und des gemessenen spezifischen Widerstandes $R_a$ für eine gegebene Entfernung d von Sender-Empfänger im Falle von verschiedenen Dimensionsparametern p der Umgebung, bezogen auf die Heterogenität, dar,

– man mißt zunächst den elektrischen spezifischen Widerstand der Umgebung oder der Heterogenität,

- man mißt anschließend bei am Boden des Bohrlochs im wesentlichen parallel zu dieser Heterogenität angeordneten Meßanordnung einen Wert des spezifischen Widerstandes $R_a$ für eine gegebene Entfernung von Sender-Empfänger,

– man bestimmt die Dimensionsparameter, den spezifischen Widerstand der Umgebung oder die Heterogenität oder die unbekannten kombinierten Parameter und

– ausgehend von wenigstens drei gemessenen Werten $R_a$ identifiziert man die Kurve entsprechend den Meßbedingungen auf der Entwicklung der theoretisch erhaltenen Parameter.

3. Bestimmungsverfahren nach Anspruch 2, **dadurch gekennzeichnet,** daß man vor den Messungen die Konfiguration dieser Heterogenität, bezogen auf die geologische Umgebung, identifiziert.

4. Bestimmungsverfahren nach einem der Ansprüche 1 bis 3, **dadurch gekennzeichnet,** daß man für die Darstellung durch Simulation zwei kombinierte Parameter verwendet, wobei der erste kombinierte Parameter $R_a/R_h$ das Verhältnis dieses charakteristischen gemessenen Wertes $R_a$ zum charakteristischen Wert der Umgebung $R_H$ ist, wobei der zweite kombinierte Parameter $R_h/R_e$ das Verhältnis dieses charakteristischen Parameters der Umgebung $R_h$ zu diesem charakteristischen Parameter der Heterogenität $R_e$ ist, wobei der erste kombinierte Parameter einer Anomalie des charakteristischen Parameters entspricht und der zweite kombinierte Parameter einem Kontrast des charakteristischen Parameters entspricht.

5. Bestimmungsverfahren nach einem der Ansprüche 1 bis 4, **dadurch gekennzeichnet,** daß man zunächst den spezifischen Widerstand der Umgebung oder den spezifischen Widerstand der Heterogenität vermittels dieser Meßanordnung mißt.

6. Bestimmungsverfahren nach einem der Ansprüche 1 bis 5, **dadurch gekennzeichnet,** daß anschließend an die Simulation dieser Anwendung man

– graphisch ihre Entwicklung als Funktion der simulierten Veränderung des spezifischen gemessenen Widerstandes sowie der diesem Wert zugeordneten Entfernung von Sender-Empfänger darstellt und

– man diese charakteristischen Parameter identifiziert durch Überlagerung mit dieser graphischen Darstellung.

7. Bestimmungsverfahren nach einem der Ansprüche 1 bis 6, **dadurch gekennzeichnet,** daß man die Bestimmung der charakteristischen Parameter mit Hilfe dieser Messungen des spezifischen Widerstandes vermittels dieser Meßanordnung derart durchführt, daß die Richtung der in den geologischen Formationen durchgeführten Bohrung geführt wird.

**Claims**

1. A method for determining, in a geologic environment comprising at least one heterogeneity, at least one characteristic parameter of the environment or of the heterogeneity and at least one dimensional parameter p of the environment or of the heterogeneity, wherein a measuring assembly is taken down to the bottom of a well and comprises at least one emitter cooperating with at least two detectors arranged substantially along a straight line, each detector showing on said line an increasing distance with respect to said emitter, so that, to perform a measuring, the emitter is associated with a detector, separated by a given distance d, the measuring assembly providing then at least one value of a characteristic parameter for said distance d, a method whereby the following stages are carried out :

– a characteristic application of the physical phenomenon associated with the characteristic parameters used is defined, said application defining a relation between said emitter-receiver distance d, said value of the measured characteristic value, said dimensional parameter p of the environment and of the heterogeneity, and said characteristic parameter of the environment, or of the heterogeneity, and one or several combined parameters of said dimensional parameters, characteristic parameters of the environment of the heterogeneity, and of said distance d or said measured value,

– the evolution of the various parameters, values and distance connected by said application is represented by a theoretical simulation before measuring,

– one of said dimensional parameters, or characteristic of the environment or characteristic of the heterogeneity, or a combined parameter of these dimensional and characteristic parameters is initially measured,

– a characteristic value is successively measured with said measuring assembly, whatever the position thereof in the well for a given emitter-receiver distance d, and

– the unknown dimensional parameters or characteristic of the environment or characteristic of the heterogeneity and said unknown combined parameters are determined by identification with the evolution of said application represented by theoretical simulation, by means of said initially measured characteristic or dimensional parameter, of said measured characteristic value and of said emitter-receiver distance d associated with said measured characteristic value or several combined parameters of said measured characteristic parameter, of said measured value and of said associated distance d.

2. A method of determination as claimed in claim 1, wherein the physical phenomenon linked to the measuring being a perturbation in the electric field, the characteristic parameters thus being electrical resistivities,

– the evolution of the electrical resistivities of the environment $R_h$, of the heterogeneity $R_e$ and of the measured resistivity $R_a$ for a given emitter-receiver distance d, in the case of various dimensional parameters p of the environment with respect to the heterogeneity, is represented by theoretical simulation before measuring,

– the electrical resistivity of the environment or of the heterogeneity is initially measured,

– a resistivity value $R_a$ is successively measured for a given emitter-receiver distance by means of said measuring assembly located at the well bottom, substantially parallel to said heterogeneity,

– the dimensional parameters, the resistivity of the environment or of the heterogeneity or the unknown combined parameters are determined,

– the curve corresponding to the measuring conditions is identified from at least three measured values $R_a$ with respect to the evolution of the theoretically obtained parameters.

3. A method of determination as claimed in claim 2, wherein the pattern of said heterogeneity with respect to the geologic environment is identified before measuring.

4. A method of determination as claimed in any one of claims 1 to 3, wherein two combined parameters are used for the representation by simulation, the first combined parameter $R_a/R_h$ being the ratio of said measured characteristic value $R_a$ to the characteristic parameter of the environment $R_h$, the second combined parameter $R_h/R_e$ being the ratio of said characteristic parameter of the environment $R_h$ to said characteristic parameter of the heterogeneity $R_e$, the first combined parameter corresponding to an anomaly of the characteristic parameter, and the second combined parameter corresponding to a contrast of the characteristic parameter.

5. A method of determination as claimed in any one of claimss 1 to 4, wherein the resistivity of the environment or the resistivity of the heterogeneity is initially measured by means of said measuring assembly.

6. A method of determination as claimed in any one of claims 1 to 5, wherein, after the simulation of said application,

– the evolution thereof is graphically represented as a function of the simulated variation of the measured resistivity and of the emitter-receiver distance associated with this value, and

– said characteristic parameters are identified by superposition on said graphical representation.

7. A method of determination as claimed in any one of claims 1 to 6, wherein determining the characteristic parameters is achieved with said resistivity measurings by means of said measuring assembly in order to guide the direction of drilling in the geologic formations.

**FIG.1**

**FIG.2**

**FIG.3**

**FIG.4**

## FIG.5

## FIG.6

**FIG.8**

**FIG.7**